# EUROPÄISCHE PATENTSCHRIFT

(11) **EP 3 143 225 B1**
(45) Veröffentlichungstag und Bekanntmachung des Hinweises auf die Patenterteilung: **15.08.2018**
(21) Anmeldenummer: 15731498.0
(22) Anmeldetag: 13.05.2015
(51) Int. Cl.: E05B 77/10, E05B 85/02

(54) **KRAFTFAHRZEUGTÜRVERSCHLUSS**
MOTOR VEHICLE DOOR LOCKING SYSTEM
SYSTÈME DE FERMETURE DE PORTE DE VÉHICULE À MOTEUR

(30) Priorität: 16.05.2014 DE 102014007119; 05.02.2015 DE 102015001317
(43) Veröffentlichungstag der Anmeldung: 22.03.2017
(73) Patentinhaber: Kiekert AG, 42579 Heiligenhaus (DE)
(72) Erfinder: HUNDSDORFER, Nikolaus, 40878 Ratingen (DE)
(86) Internationale Anmeldenummer: PCT/DE2015/100197
(87) Internationale Veröffentlichungsnummer: WO 2015/172772

(56) Entgegenhaltungen:
- EP-A1- 0 869 247
- EP-A2- 1 582 660
- DE-A1- 4 217 140
- GB-A- 2 382 839

## Beschreibung

Die Erfindung betrifft einen Kraftfahrzeugtürverschluss, mit einem Kraftfahrzeugtürschloss an einer Kraftfahrzeugtür und einem damit wechselwirkenden Schlosshalter an einer Kraftfahrzeugkarosserie, oder umgekehrt, nach Patentanmeldung DE 10 2014 007 119.7. Das heißt, das Kraftfahrzeugtürschloss kann prinzipiell auch an der Kraftfahrzeugkarosserie vorgesehen sein, wobei dann der Schlosshalter an der Kraftfahrzeugtür angeordnet ist.
Kraftfahrzeugtürverschlüsse in der zuvor beschriebenen Ausprägung kommen millionenfach zum Einsatz und werden dementsprechend umfassend im Schrifttum behandelt. So beschäftigt sich die gattungsbildende DE 39 27 445 C2 der Anmelderin mit einem solchen Kraftfahrzeugtürverschluss, bei dem es unter anderem darum geht, Bewegungen der Kraftfahrzeugtür und damit verbundene störende Geräusche zu vermeiden. Zusätzlich soll eine im Fahrbetrieb unterstützende Sperrwirkung im Hinblick auf solche dynamischen Beanspruchungen zur Verfügung gestellt werden. Zu diesem Zweck ist ein spezieller Sperrtrieb vorgesehen, welcher den technologischen und mechanischen Aufwand vergrößert. Weiterhin ist aus der EP 0 869 247 A1 ein Kraftfahrzeugtürverschluss bekannt, in welchem ein Rückhalteelement vorgesehen ist, welches eine Einlauföffnung für den Schlosshalter im Kraftfahrzeugtürschloss selbst bei unfallbedingten Verformungen der Kraftfahrzeugtür freihält. Im ebenfalls gattungsbildenden Stand der Technik nach der DE 1 915 627 hat man sich bereits die Aufgabe gestellt, durch einen Unfall hervorgerufene Deformationen oder ein Verklemmen einer Gabelfalle als Bestandteil eines mit dem Schlosshalter wechselwirkenden Gesperres zu vermeiden. Zu diesem Zweck schlägt die bekannte Lehre letztlich eine Nische vor, deren Wandung einen unterschnittenen Eintrittsschlitz für einen Schließkloben formt. Ein Bund des Schließklobens wird dabei an einer Randzone des Eintrittsschlitzes im Gefahrfalle unmittelbar abgestützt. Dadurch wird zwar ein Verklemmen der Drehfalle bei einem Unfall im Innern des Kraftfahrzeugtürschlosses vermieden. Allerdings sind neben etwaigen Deformationen des Kraftfahrzeugtürschlosses insbesondere auch Verformungen der das Kraftfahrzeugtürschloss aufnehmenden Kraftfahrzeugtür zu berücksichtigen.
Tatsächlich hat es sich in der Praxis bei beispielsweise Seitenaufprallen oder so genannten Offset-Aufprallen, das heißt Frontalaufprallen mit versetztem Hindernis gezeigt, dass hierbei die Kraftfahrzeugtür erheblich verformt wird und meistens in Richtung auf den Schlosshalter eine Deformation aufweist. Dadurch besteht die Gefahr, dass beispielsweise ein das Kraftfahrzeugtürschloss tragendes Türinnenblech in deformierten Zustand den Schlosshalter respektive dessen Schlosshalterbügel hintergreift. Dieses Hinterhaken des Türinnenblechs führt nun jedoch dazu, dass die Kraftfahrzeugtür nach einem solchen Unfallhergang nicht oder praktisch nicht von Rettungskräften geöffnet werden kann.
Vielmehr sind für die Öffnung meistens Spezialwerkzeuge (so genannte Rettungsscheren) erforderlich, die Laien oder anderen Unfallbeteiligten überhaupt nicht zur Verfügung stehen und erst aufwendig zum Unfallort hingebracht werden müssen. Dadurch lassen sich oftmals lebensrettende Behandlungen der Unfallopfer nur verzögert einleiten. Hier will die Erfindung insgesamt Abhilfe schaffen.
Der Erfindung liegt das technische Problem zugrunde, einen derartigen Kraftfahrzeugtürverschluss so weiter zu entwickeln und zu verbessern, dass insbesondere Verformungen der das Kraftfahrzeugtürschloss tragenden Kraftfahrzeugtür bei einem Unfall die Funktionsfähigkeit des Kraftfahrzeugtürschlosses nicht oder jedenfalls nicht in entscheidender Weise behindern.
Zur Lösung dieser technischen Problemstellung ist ein gattungsgemäßer Kraftfahrzeugtürverschluss im Rahmen der Erfindung dadurch gekennzeichnet, dass ein mechanisches Rückhalteelement vorgesehen ist, welches eine Einlauföffnung für den Schlosshalter im Kraftfahrzeugtürschloss selbst bei unfallbedingten Verformungen der Kraftfahrzeugtür freihält, wobei das Freihalten mittels des Rückhalteelementes durch eine Formgebung des Rückhaltelementes erfolgt, wobei das Rückhalteelement in Richtung von der Einlauföffnung weg gebogen ausgeführt ist und einen Winkel W von größer 90°, ausgehend von der Einlauföffnung aufweist. Das Rückhalteelement sorgt also insgesamt dafür, dass die Einlauföffnung für den Schlosshalter im Kraftfahrzeugtürschloss ihre ursprüngliche Größe und Form praktisch unverändert beibehält, und zwar selbst bei einem Unfall. Denn das Rückhalteelement fungiert als gleichsam mechanischer Anschlag oder mechanische Sperre für etwaige Deformationen der Kraftfahrzeugtür. Diese Deformationen werden folglich von der Einlauföffnung für den Schlosshalter im Kraftfahrzeugtürschloss ferngehalten. In vorteilhafter Weise kann dabei die Formgebung des Rückhalteelementes eine auch nach dem Unfall erforderliche Funktionsfähigkeit des Seitentürschlosses unterstützen. Erfindungsgemäß ist das Rüchhalteelement in Richtung von der Einlauföffnung weg gebogen ausgeführt ist und weist vorzugsweise einen Winkel von größer 90°, ausgehend von der Einlauföffnung auf. Die Einlauföffnung ist in Bezug auf den Schlosshalter bzw. den Schlosshalterbügel dem Schlosshalter gegenüber angeordnet, so dass der Schlosshalter in das Kraftfahrzeugtürschloss eingreifen kann, wenn zum Beispiel eine das Kraftfahrzeugtürschloss tragende Seitentür geschlossen wird. Üblicherweise ist weist die Seitentür eine Öffnung auf, die den Einlaufbereich des Kraftfahrzeugschlosses freigibt und die für einen Bediener des Fahrzeug sichtbar ist. Das Rückhalteelement ragt dabei aus der Öffnung der Seitentür heraus, wobei das Rückhalteelement aus dem Teil der Seitentür herausragt, der der Montagefläche des Schlosshalters gegenüberliegt. Vorzugsweise können die Montagefläche des Schlosshalters und die Öffnung in der Seitentür parallel zueinander angeordnet sein. Das Rückhalteelement ragt zumindest so weit aus der Öffnung heraus, dass das Blech; der Seitentür hinter dem äußeren Ende des Rückhalteelementes zurückbleibt. Dabei ist kann das Rückhalteelement rechtwinkelig zur Öffnung in der Seitentür und/oder rechtwinkelig zur Einlauföffnung im Kraftfahrzeugtürschloss ausgebildet sein. Ein Vorteil ergibt sich dann, wenn das Rückhalteelement über den rechten Winkel hinaus gebogen ist, also mehr als 90° beträgt. Durch eine derartige Ausbildung des Rückhalteelementes wird das Blech der Seitentür hinter dem Rückhalteelement sozusagen eingeklemmt und gehalten. Hierzu ist im Detail das Rückhalteelement mechanisch so ausgelegt, dass als Werkstoff ein solcher zum Einsatz kommt, bei welchem selbst bei auftretenden und durch einen Unfall bedingten angreifenden Kräften durch ein beispielsweise dagegen laufendes verformtes Türblech der Kraftfahrzeugtür eine Verformung nicht oder praktisch nicht beobachtet wird. Das heißt, die Festigkeit des eingesetzten Materials für das Rückhalteelement muss deutlich größer als die Festigkeit des eingesetzten Metallbleches für die Kraftfahrzeugtür ausgelegt sein. Tatsächlich hat sich als Werkstoff für das Rückhalteelement beispielsweise hochfester Stahl mit einer Mindeststreckgrenze größer als 350 N/mm2, bevorzugt mit mehr als 500 N/mm2 als günstig erwiesen. Demgegenüber weisen Karosseriebleche und folglich auch das Türblech bzw. Türinnenblech der Kraftfahrzeugtür Streckgrenzen im Bereich von etwa 200 bis 250 N/mm2 auf.

Jedenfalls liegt die Festigkeit bzw. Streckgrenze des Materials für das Rückhalteelement um wenigstens 40 %, insbesondere um 50 % und mehr oberhalb derjenigen des Materials für die Kraftfahrzeugtür bzw. der an dieser Stelle eingesetzten Karosseriebleche. Hinzukommt, dass das Rückhalteelement nicht nur aus einem bestimmten Werkstoff (hochfester Stahl) ausgelegt ist, sondern sich darüber hinaus am Kraftfahrzeugtürschloss abstützt. Meistens ist das Rückhalteelement an einer Schlossplatte im Innern des Kraftfahrzeugtürschlosses angeschlossen. Dabei hat sich eine einstückige Auslegung von einerseits dem Rückhalteelement und andererseits der Schlossplatte als besonders günstig erwiesen. Denn auch die Schlossplatte ist regelmäßig aus einem hochfesten Stahl gefertigt, welcher die zuvor bereits beschriebenen Materialeigenschaften aufweist. Schließlich verfügen das Rückhalteelement und gegebenenfalls die damit einstückige Schlossplatte über eine Materialstärke, welche diejenige der Kraftfahrzeugtür bzw. des Karosseriebleches um ein Mehrfaches übertrifft, beispielsweise doppelt so groß oder noch mehr ist.

Dadurch kann das Rückhalteelement vorteilhaft aus der Schlossplatte ausgeformt oder an die Schlossplatte angeformt werden. Durch die einstückige Auslegung von einerseits dem Rückhalteelement und andererseits der Schlossplatte kann für das Rückhalteelement zum einen und die Schlossplatte zum anderen auf eine gemeinsame Stahlplatte mit den beschriebenen Werkstoffeigenschaften (Streckgrenze mehr als 350 N/mm2 und Materialstärke deutlich größer als diejenige des Karosseriebleches) zurückgegriffen werden, aus welcher sowohl die Schlossplatte als auch das daran angeformte Rückhalteelement gebildet werden. Tatsächlich ist das Rückhalteelement im Regelfall als aus der Schlossplatte ausgestellte Lasche ausgebildet.

Wie üblich dient die Schlossplatte zur Lagerung eines mit dem Schlosshalter wechselwirkenden Gesperres. Das Gesperre setzt sich seinerseits aus einer Drehfalle und einer die Drehfalle festhaltenden Sperrklinke zusammen. Die Drehfalle wechselwirkt in bekannter Art und Weise mit dem Schlosshalter bzw. einem Schließbolzen am Schlosshalter. Außerdem ist die Schlossplatte meistens L-förmig ausgebildet. Tatsächlich setzt sich die Schlossplatte aus einem das Gesperre aufnehmenden Gesperreschenkel und einem Befestigungsschenkel zusammen. Der Befestigungsschenkel dient letztendlich (nur) dazu, die Schlossplatte insgesamt an ein Türblech bzw. Türinnenblech der Kraftfahrzeugtür anzuschließen. Demgegenüber fungiert der Gesperreschenkel der Schlossplatte als Lagerplatte für das Gesperre.

Das Rückhalteelement ist im Regelfall randseitig der Einlauföffnung angeordnet. Außerdem erstreckt sich das Rückhalteelement größtenteils parallel zur Einlaufrichtung des Schlosshalters in die Einlauföffnung. Dabei hat es sich insgesamt bewährt, wenn sich das Rückhalteelement entgegengesetzt zur Einlaufrichtung des Schlosshalters in das Kraftfahrzeugtürschloss erstreckt, und zwar ausgehend vom Kraftfahrzeugtürschloss. Dadurch ist das Rückhalteelement gleichsam nach außerhalb des Türschlosses gerichtet orientiert. Auf diese Weise werden außerhalb des Türschlosses beobachtete Deformationen des Türinnenbleches wirkungsvoll aufgefangen.

Durch die randseitige Anordnung des Rückhalteelementes in Bezug auf die Einlauföffnung und dessen Auslegung als aus der Schlossplatte ausgestellte Lasche sowie die größtenteils parallele Erstreckung im Vergleich zur Einlaufrichtung des Schlosshalters wird sichergestellt, dass Verformungen insbesondere des Türinnenbleches der Kraftfahrzeugtür nicht bis in den Bereich der Einlauföffnung hineinreichen können. Vielmehr fungiert das Rückhalteelement für solche Verformungen als gleichsam Anschlag.

Anders ausgedrückt, wird beispielsweise das im Zuge eines Unfalls verformte Türinnenblech in Richtung auf die Einlauföffnung an das Rückhalteelement angelegt. Weitere Verformungen des fraglichen Türinnenbleches führen nun bei einem solchen Unfallszenario nicht dazu, dass das Rückhalteelement verformt wird, weil dieses aus einem deutlich festeren Werkstoff mit größerer Materialstärke geformt ist. Zugleich sorgt der Anschluss des Rückhalteelementes an die ebenfalls massiv ausgelegte Schlosshalterplatte dafür, dass das Türinnenblech im geschilderten Beispielfall dem Verlauf des Rückhalteelementes folgt und sich jedenfalls nicht bis in den Bereich der Einlauföffnung für den Schlosshalter ausdehnt oder ausdehnen kann. Dadurch wird die Einlauföffnung für den Schlosshalter im Kraftfahrzeugtürschloss bei solchen unfallbedingten Verformungen der Kraftfahrzeugtür freigehalten.
Als Folge hiervon lässt sich selbst die verformte Kraftfahrzeugtür prinzipiell öffnen, weil es zu dem im Stand der Technik und in der Praxis beobachteten Verhaken zwischen dem Türinnenblech einerseits und dem Schlosshalter andererseits nicht oder praktisch nicht mehr kommt. Dadurch ist der Zugang zum Kraftfahrzeug und dort etwaig befindlichen verletzten Personen vereinfacht und kann prinzipiell auch von Laien ohne Spezialwerkzeuge bewerkstelligt werden. Daraus resultiert insgesamt ein erheblicher Sicherheitsgewinn und werden Unfallschäden im Vergleich zum Stand der Technik deutlich minimiert. Hierin sind die wesentlichen Vorteile zu sehen.

Eine weitere vorteilhafte Ausführungsform ergibt sich dann, wenn das Rückhalteelement eine Nut aufweist, wobei die Nut in Richtung der der Einlauföffnung entgegengesetzten Seite des Rückhalteelementes eingebracht ist. Durch die Ausbildung einer Nut im Rückhalteelement kann das Blech formschlüssig aufgenommen werden. Insbesondere ist eine gezielte Führung des Bleches ermöglicht, so dass beispielsweise das Türblech von der Einlauföffnung weg bewegt werden kann, wenn sich im Falle eines Unfalls die Tür deformiert.
Im Folgenden wird die Erfindung anhand einer lediglich ein Ausführungsbeispiel darstellenden Zeichnung näher erläutert; es zeigen:
- Fig. 1: einen Kraftfahrzeugtürverschluss nach dem Stand der Technik mit durch einen Unfall verformter Kraftfahrzeugtür,
- Fig. 2: einen Kraftfahrzeugtürverschluss in vergleichbarer Funktionsstellung,
- Fig. 3: eine dreidimensionale Ansicht auf einen Einlaufbereich eines erfindungsgemäßen Kraftfahrzeugtürverschlusses mit einem um mehr als 90° gebogenen Rückhalteelement und
- Fig. 4: eine dreidimensionale Ansicht auf einen Einlaufbereich eines Kraftfahrzeugtürverschlusses mit einem um mit einer Nut versehenen Rückhalteelement.

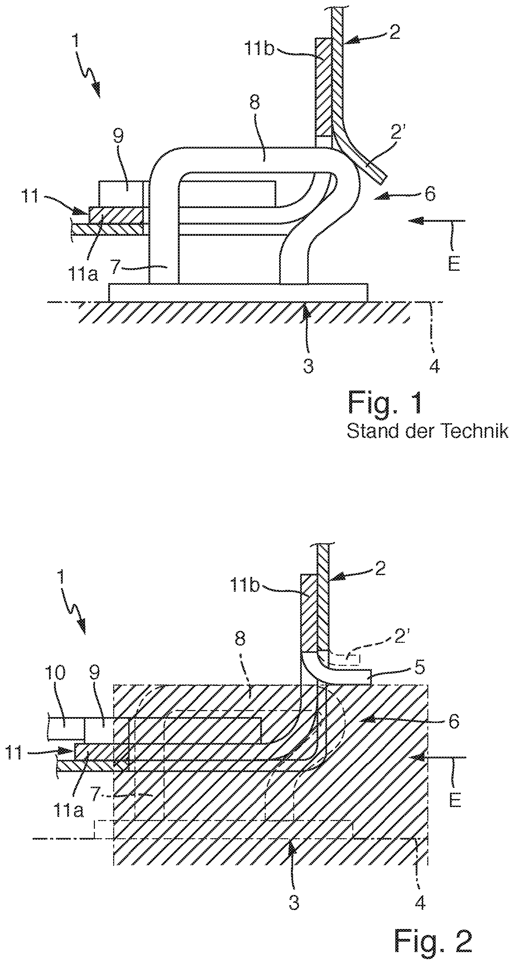

In den Figuren ist ein Kraftfahrzeugtürverschluss dargestellt, der grundsätzlich mit einem Kraftfahrzeugtürschloss 1 an einer Kraftfahrzeugtür 2 und einem damit wechselwirkenden Schlosshalter 3 an einer Kraftfahrzeugkarosserie 4 ausgerüstet ist. Grundsätzlich kann auch umgekehrt vorgegangen werden, das heißt, dass das Kraftfahrzeugtürschloss 1 an der Kraftfahrzeugkarosserie 4 angebracht ist, wohingegen sich der Schlosshalter 3 in oder an der Kraftfahrzeugtür 2 befindet. Diese Variante ist jedoch nicht dargestellt.
Bei der Vorgehensweise nach dem Stand der Technik entsprechend der Fig. 1 erkennt man, dass die Kraftfahrzeugtür 2 durch einen Unfall deformiert wird. Tatsächlich ist in dem jeweiligen Ausführungsbeispiel lediglich ein Türinnenblech 2 der Kraftfahrzeugtür 2 dargestellt, welches durch einen Unfall bedingte Verformungen 2' aufweist. Nach dem Stand der Technik können diese Verformungen 2' am Schlosshalter 3 bzw. dessen Schlosshalterbügel anliegen bzw. hinter den fraglichen Schlosshalterbügel hinterhaken. Dadurch wird der Schlosshalter 3 im Stand der Technik nach der Fig. 1 insgesamt verkeilt oder durch die deformierte Kraftfahrzeugtür 2 festgeklemmt. Als Folge hiervon lässt sich die Kraftfahrzeugtür 2 nicht oder praktisch nicht öffnen, jedenfalls nicht ohne Spezialwerkzeug, wie dies einleitend bereits beschrieben wurde.

Bei dem Kraftfahrzeugschloss nach der Fig. 2 ist jedoch ein Rückhalteelement 5 vorgesehen, welches eine Einlauföffnung 6 für den Schlosshalter 3 im Kraftfahrzeugtürschloss 1 selbst bei unfallbedingten Verformungen der Kraftfahrzeugtür 2 freihält. Das ist in der Fig. 2 dadurch angedeutet, dass in diesem Fall gestrichelt dargestellte Verformungen 2' des Türinnenbleches 2 von dem Rückhalteelement 5 um- bzw. abgelenkt werden. Jedenfalls können diese Verformungen 2' die Einlauföffnung 6 bei der Erfindungslösung nach der Fig. 2 nicht (mehr) erreichen. Die Einlauföffnung 6 behält also selbst bei dem dargestellten Unfallszenario im Wesentlichen ihre Größe und Gestalt bei.
Um dies im Detail zu erreichen, ist das Rückhalteelement 5 randseitig der Einlauföffnung 6 für den Schlosshalter 3 angeordnet. Tatsächlich beschreibt die Einlauföffnung 6 einen in der Fig. 2 insgesamt schraffiert angelegten Bereich, welcher sich vom Innern des Kraftfahrzeugtürschlosses 1 bis nach außerhalb hin erstreckt. Dieser in der Fig. 2 im Querschnitt dargestellte und in der Praxis räumlich sowie längserstreckt quaderförmig ausgedehnte Bereich bzw. die Einlauföffnung 6 wird letztlich durch die Bewegung des Schlosshalters 3 relativ zur Kraftfahrzeugtür 2 beschrieben und aufgespannt.

Tatsächlich kommt es beim Schließen der Kraftfahrzeugtür 2 gegenüber der Kraftfahrzeugkarosserie 4 dazu, dass der Schlosshalter 3 in der in Fig. 2 dargestellten Einlaufrichtung E gegenüber der Kraftfahrzeugtür 2 bewegt wird. Alternativ und bevorzugt wird die Kraftfahrzeugtür 2 gegenüber dem Schlosshalter 3 bewegt, wobei die Kraftfahrzeugtür 2 zum Beispiel beim Schließen in Richtung des Schlosshalters 3 bewegt wird. Auf diese Weise kann ein frontseitiger Schließbolzen 7 als Bestandteil des dargestellten Schlosshalterbügels 8 mit einem Gesperre 9, 10 im Innern des Kraftfahrzeugtürschlosses 1 wechselwirken. Zum Öffnen der Kraftfahrzeugtür 2 bewegt sich der Schlosshalter 3 in umgekehrter Richtung im Vergleich zur Einlaufrichtung E, was für die Erfindung von untergeordneter Bedeutung ist.

Das Gesperre setzt sich aus einer Drehfalle 9 und einer zugehörigen Sperrklinke 10 zusammen. Hierbei greift der Schließbolzen 7 in eine Einlauföffnung der Drehfalle 9 ein, welche sich als Folge hiervon dreht, so dass im Anschluss daran in Verbindung mit der Sperrklinke 10 verschiedene Raststellungen und insbesondere die Hauptraststellung bei vollständig geschlossener Kraftfahrzeugtür 2 gegenüber der Kraftfahrzeugkarosserie 4 eingenommen werden.

Man erkennt, dass sich das Rückhalteelement 5 größtenteils parallel zur Einlaufrichtung E des Schlosshalters 3 in die Einlauföffnung 6 erstreckt. Außerdem ist das Rückhalteelement 5 entgegengesetzt zur Einlaufrichtung E ausgerichtet bzw. erstreckt sich entgegengesetzt zur Einlaufrichtung E ausgehend vom Kraftfahrzeugtürschloss 1.

Das Rückhalteelement 5 ist an eine Schlossplatte 11 im Innern des Kraftfahrzeugtürschlosses 1 angeschlossen. Die Schlossplatte 11 ist in Seitenansicht L-förmig gestaltet. Tatsächlich setzt sich die L-förmige Schlossplatte 11 aus einem das Gesperre 9, 10 drehbar aufnehmenden Gesperreschenkel 11a und einem an das Türinnenblech 2 der Kraftfahrzeugtür 2 angeschlossenen Befestigungsschenkel 11b zusammen.

Das Rückhalteelement 5 ist nicht nur an die fragliche Schlossplatte 11 im Innern des Kraftfahrzeugtürschlosses 1 angeschlossen, sondern das Rückhalteelement 5 und die Schlossplatte 11 sind einstückig ausgebildet. Dabei kann das Rückhalteelement 5 aus der Schlossplatte 11 ausgeformt sein. In diesem Fall werden die Schlossplatte 11 und das Rückhalteelement 5 gemeinsam aus einer Platte aus hochfestem Stahl ausgeformt. Tatsächlich handelt es sich bei dem Rückhalteelement 5 um eine aus der Schlossplatte 11 ausgestellte Lasche 5, welche das Türinnenblech 2 bei einem Unfallvorgang von der Einlauföffnung 6 wie beschrieben zurückhält. Dabei ist insgesamt der Befestigungsschenkel 11b der L-förmigen Schlossplatte 11 mit der fraglichen ausgestellten Lasche 5 ausgerüstet.

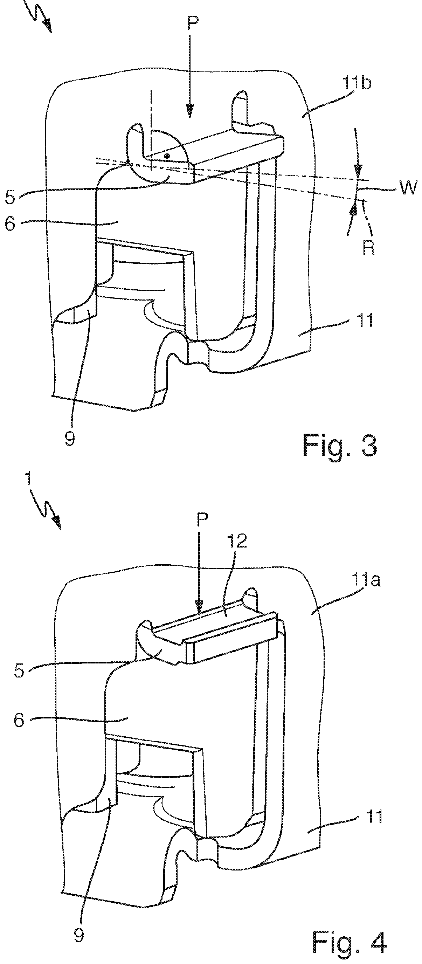

In der Figur 3 ist eine dreidimensionale Ansicht auf ein Kraftfahrzeugtürschloss 1 im Bereich der Einlauföffnung 6 dargestellt. Das Kraftfahrzeugtürschloss ist losgelöst von der Kraftfahrzeugtür 2 dargestellt, wobei ein Blech der Seitentür 2 bei einem Seitenaufprall in Richtung des Pfeils P auf die Lasche 5 gedrückt und verformt würde. Ein Vorschieben des Bleches der Seitentür 2 über den Bereich der Einlauföffnung 6 wird durch die Lasche 5 verhindert.
Eine Linie R ist rechtwinkelig zum Befestigungsschenkel 11a ausgerichtet. Die Lasche 5 ist um einen Winkel W weiter gebogen zum Befestigungsschenkel 11a und weist folglich erfindungsgemäß bezogen auf die Einlauföffnung einen Winkel von mehr als 90° zur Einlauföffnung 6 auf. Im Falle eines Unfalls wird das Blech der Seitentür 2 in Richtung des Pfeils P verformt, wobei das Blech auf die Lasche 5 trifft und von der Lasche 5 zurückgehalten wird. Ein sich über den Einlaufbereich 6 hinausschieben des Bleches wird in besonderer Weise durch die Formgebung der Lasche 5 verhindert.
In der Figur 4 ist ebenfalls eine dreidimensionale Ansicht auf ein Kraftfahrzeugtürschloss 1 im Bereich der Einlauföffnung 6 dargestellt, wobei das Kraftfahrzeugtürschloss 1 ebenfalls losgelöst von der Kraftfahrzeugtür 2 dargestellt ist. Die Lasche 5 weist eine Nut 12 auf, die auf einer dem Einlaufbereich 6 gegenüberliegenden Seite der Lasche 5 in die Lasche 5 eingeformt ist. Wird nun im Falle eines Unfalls ein Blech der Seitentür 2 in Richtung des Pfeils P verformt bzw. geschoben, so verhindert die Nut 12, dass sich das Blech über die Einlauföffnung 6 schiebt. Die Einlauföffnung 6 wird durch die Nut 12 in besonderer Weise geschützt, da das Blech der Seitentür zielgerichtet verformt wird. Durch die Formgebung der Nut 12 kann das Blech aufgewickelt oder in der Nut 12 aufgestaut werden, so dass ein erhöhte Sicherheit in Bezug auf eine einwandfreie Betätigung des Kraftfahrzeugseitentürschlosses auch in Extremsituationen gegeben ist.

**Bezugszeichenliste**

| | |
|---|---|
| Kraftfahrzeugtürschloss | 1 |
| Kraftfahrzeugtür, Seitentür | 2 |
| Verformung | 2' |
| Schlosshalter | 3 |
| Kraftfahrzeug karosserie | 4 |
| Rückhalteelement, Lasche | 5 |
| Einlauföffnung | 6 |
| Schließbolzen | 7 |
| Schlosshalterbügel | 8 |
| Gesperre | 9, 10 |
| Schlossplatte | 11 |
| Gesperreschenkel | 11a |
| Befestigungsschenkel | 11b |
| Nut | 12 |
| | |
| Einlaufrichtung | E |
| Deformationsrichtung | P |
| Winkel | W |

## Patentansprüche

1. Kraftfahrzeugtürverschluss, mit einem Kraftfahrzeugtürschloss (1) an einer Kraftfahrzeugtür (2) und einem damit wechselwirkenden Schlosshalter (3) an einer Kraftfahrzeugkarosserie (4), oder umgekehrt, in welchem ein Rückhalteelement (5) vorgesehen ist, welches eine Einlauföffnung (6) für den Schlosshalter (3) im Kraftfahrzeugtürschloss (1) selbst bei unfallbedingten Verformungen der Kraftfahrzeugtür (2) freihält, **dadurch gekennzeichnet dass** das Freihalten mittels des Rückhalteelementes (5) durch eine Formgebung des Rückhaltelementes erfolgt, wobei das Rückhalteelement (5) in Richtung von der Einlauföffnung weg gebogen ausgeführt ist und einen Winkel W von größer 90°, ausgehend von der Einlauföffnung aufweist.

2. Kraftfahrzeugtürverschluss nach Anspruch 1, **dadurch gekennzeichnet, dass** das Rückhalteelement (5) randseitig der Einlauföffnung (6) angeordnet ist.

3. Kraftfahrzeugtürverschluss nach Anspruch 1 oder 2, **dadurch gekennzeichnet, dass** sich das Rückhalteelement (5) größtenteils parallel zur Einlaufrichtung (E) des Schlosshalters (3) in die Einlauföffnung (6) erstreckt.

4. Kraftfahrzeugtürverschluss nach einem der Ansprüche 1 bis 3, **dadurch gekennzeichnet, dass** sich das Rückhalteelement (5) entgegengesetzt zur Einlaufrichtung (E) ausgehend vom Kraftfahrzeugtürschloss (1) erstreckt.

5. Kraftfahrzeugtürverschluss nach einem der Ansprüche 1 bis 4, **dadurch gekennzeichnet, dass** das Rückhalteelement (5) an eine im Innern des Kraftfahrzeugtürschlosses (1) vorgesehen Schlossplatte (11) angeschlossen ist.

6. Kraftfahrzeugtürverschluss nach einem der Ansprüche 1 bis 5, **dadurch gekennzeichnet, dass** das Rückhalteelement (5) und die Schlossplatte (11) einstückig ausgebildet sind.

7. Kraftfahrzeugtürverschluss nach einem der Ansprüche 1 bis 6, **dadurch gekennzeichnet, dass** das Rückhalteelement (5) aus der Schlossplatte (11) ausgeformt oder an die Schlossplatte (11) angeformt ist.

8. Kraftfahrzeugtürverschluss nach einem der Ansprüche 1 bis 7, **dadurch gekennzeichnet, dass** das Rückhalteelement (5) als aus der Schlossplatte (11) ausgestellte Lasche (5) ausgebildet ist.

9. Kraftfahrzeugtürverschluss nach einem der Ansprüche 1 bis 8, **dadurch gekennzeichnet, dass** die Schlossplatte (11) L-förmig mit einem das Gesperre (9, 10) aufnehmenden Gesperreschenkel (11a) und einem an ein Türinnenblech (2) der Kraftfahrzeugtür (2) angeschlossenen Befestigungsschenkel (11b) ausgebildet ist.

10. Kraftfahrzeugtürverschluss nach Anspruch 9, **dadurch gekennzeichnet, dass** der Befestigungsschenkel (11b) mit der ausgestellten Lasche (5) ausgerüstet ist.

11. Kraftfahrzeugtürverschluss nach einem der Ansprüche 1 bis 10, **dadurch gekennzeichnet, dass** das Rückhalteelement (5) eine Nut (12) aufweist, wobei die Nut (12) in Richtung der der Einlauföffnung (6) entgegengesetzten Seite des Rückhalteelementes (5) eingebracht ist.

## Claims

1. Motor vehicle door lock with a motor vehicle door latch (1) on a motor vehicle door (2) and an interacting latch holder (3) on a motor vehicle chassis (4), or vice versa, in which a retaining element (5) is provided for which keeps free an inlet aperture (6) for the latch holder (3) in the motor vehicle door latch (1) even in the case of deformations of the motor vehicle door (2) caused by accidents, **characterized in that** the keeping free by means of the retaining element (5) is achieved by a shape of the retaining element, where the retaining element (5) is executed deflected away in the direction of the inlet opening and has an angle W of greater than 90°, starting from the inlet opening.

2. Motor vehicle door lock according to claim 1, **characterized in that** the retaining element (5) is arranged on the edge of the inlet opening (6).

3. Motor vehicle door lock according to claim 1 or 2, **characterized in that** the retaining element (5) mainly extends in parallel to the inlet direction (E) of the latch holder (3) into the inlet opening (6).

4. Motor vehicle door lock according to one of the claims 1 to 3, **characterized in that** the retaining element (5) extends in the opposite direction to the inlet direction (E) starting from the motor vehicle door latch (1).

5. Motor vehicle door lock according to one of the claims 1 to 4, **characterized in that** the retaining element (5) is connected to a latch plate (11) provided for inside the motor vehicle door latch (1).

6. Motor vehicle door lock according to one of the claims 1 to 5, **characterized in that** the retaining element (5) and the latch plate (11) are formed as single components.

7. Motor vehicle door lock according to one of the claims 1 to 6, **characterized in that** the retaining element (5) is molded out of the latch plate (11) or molded onto the latch plate (11).

8. Motor vehicle door lock according to one of the claims 1 to 7, **characterized in that** the retaining element (5) is formed as a bracket (5) exposed from the latch plate (11).

9. Motor vehicle door lock according to one of the claims 1 to 8, **characterized in that** the latch plate (11) is formed in an L-shape with a locking mechanism leg (11a) accomodating the locking mechanism (9, 10) and a mounting leg (11b) connected to an internal door panel (2) of the motor vehicle door (2).

10. Motor vehicle door lock according to claim 9, **characterized in that** the mounting leg (11b) is equipped with the exposed bracket (5).

11. Motor vehicle door lock according to one of the claims 1 to 10, **characterized in that** the retaining element (5) has a groove (12), where the groove (12) is inserted in the direction of the side of the retaining element (5) opposite the inlet opening (6).

## Revendications

1. Serrure de porte de voiture, dotée d'un verrou de porte de voiture (1) installé sur une porte de voiture (2), et d'un support de verrou (3) interagissant avec celui-ci, installé sur une carrosserie de voiture (4) ou vice-versa, dans lequel un élément de retenue (5) gardant libre une ouverture d'entrée (6) pour le support de verrou (3) dans le verrou de porte de voiture (1), même en présence de déformations dues à des accidents de la porte de voiture (2), **caractérisée en ce que** la réservation se fait à l'aide de l'élément de retenue (5) à l'aide d'un façonnage de l'élément de retenue, à savoir que l'élément de retenue (5) est arqué dans le sens de l'ouverture d'entrée et présente un angle W supérieur à 90° depuis l'ouverture d'entrée.

2. Serrure de porte de voiture selon la revendication 1 **caractérisée en ce que** l'élément de retenue (5) se trouve sur la bordure de l'ouverture d'entrée (6).

3. Serrure de porte de voiture selon la revendication 1 ou 2, **caractérisée en ce que** l'élément de retenue (5) s'étend en grande partie parallèlement au direction d'entrée (E) du support de verrou (3) dans l'ouverture d'entrée (6).

4. Serrure de porte de voiture selon la revendication 1 ou 3, **caractérisée en ce que** l'élément de retenue (5) s'étend, opposée au sens d'entrée (E) depuis le verrou de la porte de voiture (1).

5. Serrure de porte de voiture selon une des revendications 1 à 4, **caractérisée en ce que** l'élément de retenue (5) est raccordé à une plaque de verrou (11) prévue à l'intérieur du verrou de la porte de voiture (1).

6. Serrure de porte de voiture selon l'une des revendications 1 à 5, **caractérisée en ce que** l'élément de retenue (5) et la plaque de verrou (11) se composent d'une seule pièce.

7. Serrure de porte de voiture selon une des revendications 1 à 6, **caractérisée en ce que** l'élément de retenue (5) est formé à partir de la plaque de verrou (11) ou est raccordé à la plaque de verrou (11).

8. Serrure de porte de voiture selon une des revendications 1 à 7, **caractérisée en ce que** l'élément de retenue (5) est formé de la languette (5) partant de la plaque de verrou (11).

9. Serrure de porte de voiture selon une des revendications 1 à 8, **caractérisée en ce que** la plaque de verrou (11) est en forme de L, avec une branche de verrou (11a) accueillant le verrou (9, 10), et une branche de fixation (11b) raccordée à la tôle (2) de l'intérieur de la porte de la voiture (2).

10. Serrure de porte de voiture selon la revendication 9, **caractérisée en ce que** la branche de fixation (11b) est dotée de la languette qui ressort (5).

11. Serrure de porte de voiture selon une des revendications 1 à 10, **caractérisée en ce que** l'élément de retenue (5) présente une rainure (12), à savoir que la rainure (12) est insérée en direction opposée à l'ouverture d'entrée (6) de l'élément de retenue (5).
